# EUROPEAN PATENT SPECIFICATION

(11) **EP 1 925 480 B1**
(45) Date of publication and mention of the grant of the patent: **24.03.2010**
(21) Application number: 06024238.5
(22) Date of filing: 22.11.2006
(51) Int. Cl.: B60J 5/10

(54) **Rear door of a motor vehicle**
Hecktür eines Kraftfahrzeugs
Portière arrière d'un véhicule à moteur

(43) Date of publication of application: 28.05.2008
(73) Proprietor: GM Global Technology Operations, Inc., Detroit, MI 48265-3000 (US)
(72) Inventor: Baccelli, Gian Luca, 65232 Taunusstein-Orlen (DE)
(74) Representative: Daniel, Ulrich W.P.

(56) References cited:
- EP-A- 1 084 882
- WO-A-02/27129
- GB-A- 455 629
- GB-A- 518 085
- US-A- 1 919 749
- US-A- 5 011 215
- US-A1- 2002 105 202

## Description

The invention relates to the rear door of a motor vehicle.

There are motor vehicles on the market having a rear door having two door wings and a central window. In general the window has a vertical bar in the middle such that the whole window is composed of two sub-windows, each door wing being associated with one sub-window. When driving such a motor vehicle visibility through the window is poor because of the vertical bar in the middle.

DE 4405874 A1 shows a semi-circular windowpane being rotatable by 180° to retract it into the car body. EP 0 820 388 B1 shows the closest prior art and discloses a vehicle having a rear window which is fully retractable into the lower part of the rear door.

It is an object of an embodiment of the invention to provide a rear door having a window which provides an improved visibility.

This object is solved by the features of the independent claims. Further embodiments are described by the sub-claims.

A first embodiment relates to a rear door of a motor vehicle having two wings, whereby the wings have a joint window opening with a single windowpane.

The single windowpane, which does not have a central bar in the middle, shows an improved visibility when driving the car. As a matter of fact, this rear door may be complemented by an opening mechanism for opening the door wings despite the fact that there is a single windowpane only. With the single windowpane only a single chimsl (central high mounted stop lamp) and a single wiper is needed. In the latter case the door wing into which the windowpane is retracted will have the above-mentioned single wiper.

In a further embodiment the rear door has a mechanism, henceforth called retraction mechanism, for retracting the windowpane into one of the door wings. In most cases the windowpane will be fully retracted into the interior of the door wing. After retracting the windowpane into one of the door wings the door wings can be opened separately without the windowpane impeding the door wing movement.

As can be derived from the above explanations, the retraction mechanism is part of an opening mechanism as mentioned in the penultimate paragraph. In addition, the opening mechanism includes hinges for rotating the door wings and an activator for activating the retraction mechanism. The handle of the door lock may be chosen to be the activator as will be described below in more detail.

Another embodiment suggests that the retraction mechanism is able to slide the windowpane fully into one of the door wings. This linear movement is feasible when the windowpane is relatively small in the horizontal direction, such that there is enough space to accommodate the windowpane in a single door wing. The sliding movement will be in a horizontal direction or will be partially horizontal.

In a further embodiment the retraction mechanism is able to rotate the windowpane by 90°. This solution can be chosen when the windowpane is rectangular in shape and when the width is larger than the height. A rotation by 90° then reduces the horizontal extension of the windowpane and facilitates a full retraction of the windowpane into one of the door wings.

It goes without saying that the retraction mechanism may both be able to slide the windowpane in one direction and to rotate it at the same time or consecutively.

In another embodiment the retraction mechanism comprises a disk or a cylinder having a frictional connection or having a form closure with the windowpane. In the fist case a friction disc can be used to transform the rotary movement of the disc or cylinder into a rotation of the windowpane. In the second case the transformation can be achieved with toothed wheels.

In another embodiment the retraction mechanism is able to be activated by the handle associated with the rear door. Thus when pressing the handle to open the rear door the windowpane is retracted into one of the door wings. Accordingly, by pressing the handle to close the door the windowpane gets back to its original position. The handle is part of the opening mechanism mentioned above.

It is understood that the retraction mechanism can be used manually when pressing the handle, or, in another embodiment, by means of an electric motor. The latter possibility is more convenient particularly with larger windows having heavier windowpanes.

Another aspect of the invention relates to a motor vehicle having a rear door as mentioned above.

Further elements and advantages of the claimed invention will be apparent from the following detailed description with reference to the accompanying drawings. This description should be understood to represent nonlimiting examples of the invention. Furthermore, the use of reference signs in the drawings shall not be understood to limit the scope of the claimed invention.
- Fig. 1: shows a motor vehicle with two door wings, the door wings having a joint windowpane,
- fig. 2: shows the motor vehicle of figure 1 with opened door wings,
- fig. 3: shows a retraction mechanism for the motor vehicle of figure 1.

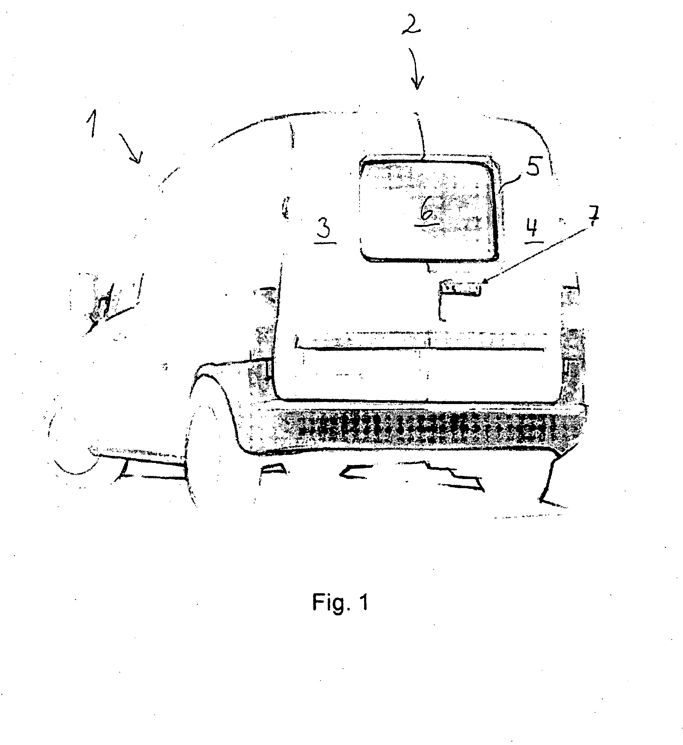

Figure 1 shows a motor vehicle 1 with a rear door 2 having two door wings 3 and 4. The door wings 3, 4 can be rotated along roughly vertical axis (not shown) and have a joint window opening 5 with a single windowpane 6.

The single windowpane 6 provides an improved visibility for the driver when looking through it. This is because the rear window has no vertical bar in the window. Furthermore, the rear window of vehicle 1 only needs a single chimsl and a single wiper.

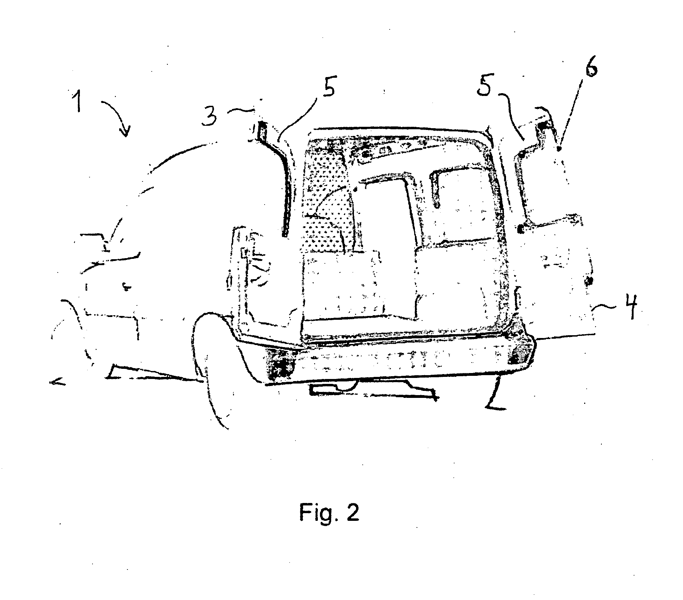

The rear door 2 can be opened in the usual way by turning the handle 7. Figure 2 shows the motor vehicle 1 after opening the rear door 2. The whole windowpane 6 is now within door wing 4 whereby the portion of the window opening 5 which belongs to door wing 3 is empty.

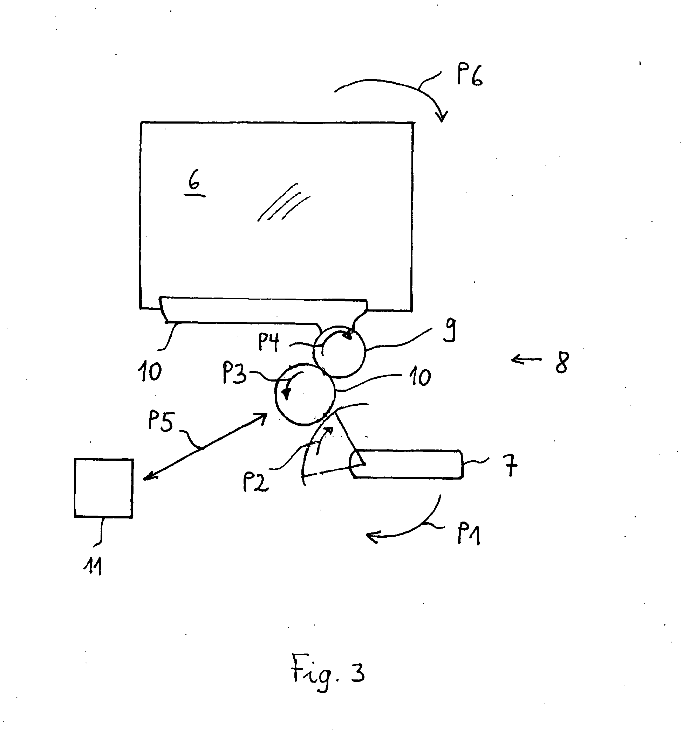

Figure 3 shows a retraction mechanism 8 usable for the vehicle of figure 1. A disk 9 has a frictional connection with an extension 10 of windowpane 6. Disk 9 itself is in frictional contact with cylinder 10, which can be rotated, as indicated by the arrows P1 to P4. A rotation can be accomplished either manually with the help of handle 7 or with an electric motor 11 operatively connected to cylinder 10 or to disk 9 as indicated by double-headed arrow P5. As a result, the windowpane 6 is rotated clockwise by 90° as indicated by arrow P6.

### List of reference numerals

- 01: motor vehicle
- 02: rear door
- 03: door wing
- 04: door wing
- 05: door opening
- 06: windowpane
- 07: handle
- 08: retraction mechanism
- 09: disk
- 10: extension
- 11: electric motor

- P1: arrow
- P2: arrow
- P3: arrow
- P4: arrow
- P5: double-headed arrow
- P6: arrow

## Claims

1. Rear door (2) of a motor vehicle (1) having two door wings (3,4), the door wings having a joint window opening (5) with a single windowpane (6).

2. Rear door according to claim 1, with a mechanism (8), henceforth called retraction mechanism, for retracting the windowpane into one of the door wings.

3. Rear door according to claim 1, whereby the retraction mechanism is able to slide the windowpane into one of the door wings.

4. Rear door according to any preceding claim, whereby the retraction mechanism is able to rotate the windowpane by 90°.

5. Rear door according to any preceding claim, whereby the retraction mechanism comprises a disk or a cylinder having a frictional connection or a form closure with the windowpane.

6. Rear door according to any preceding claim, whereby the retraction mechanism is able to be activated by the handle (7) associated with the rear door.

7. Rear door according to any preceding claim, whereby the windowpane is rotated by means of an electric motor (9).

8. Motor vehicle having a rear door according to any of the claims 1 to 7.

## Patentansprüche

1. Hecktür (2) eines Kraftfahrzeugs (1) mit zwei Türflügeln (3, 4), wobei die Türflügel eine gemeinsame Fensteröffnung (5) mit einer einzelnen Fensterscheibe (6) besitzen.

2. Hecktür gemäß Anspruch 1, mit einem Mechanismus (8), der im weiteren als Einzugsmechanismus bezeichnet wird, zum Einziehen der Fensterscheibe in einen der Türflügel.

3. Hecktür gemäß Anspruch 1, wobei der Einzugsmechanismus geeignet ist, die Fensterschiebe in einen der Türflügel zu schieben.

4. Hecktür gemäß einem der vorangehenden Ansprüche, wobei der Einzugsmechanismus geeignet ist, die Fensterscheibe um 90° zu drehen.

5. Hecktür gemäß einem der vorangehenden Ansprüche, wobei der Einzugsmechanismus eine Scheibe oder einen Zylinder mit einer Reibungsverbindung oder einem Formschluss mit der Fensterscheibe umfasst.

6. Hecktür gemäß einem der vorangehenden Ansprüche, wobei der Einzugsmechanismus geeignet ist, mit dem mit der Hecktür verbundenen Griff (7) betätigt zu werden.

7. Hecktür gemäß einem der vorangehenden Ansprüche, wobei die Fensterscheibe mittels eines Elektromotors (9) gedreht wird.

8. Kraftfahrzeug mit einer Hecktür gemäß einem der Ansprüche 1 bis 7.

## Revendications

1. Porte arrière (2) d'un véhicule à moteur (1) ayant deux ailes de porte (3, 4), ces ailes de porte disposant d'une ouverture de fenêtre conjointe (5) avec une seule vitre (6).

2. Porte arrière selon la revendication 1, avec un mécanisme (8) désormais appelé mécanisme de rétraction, pour rentrer la vitre dans l'une des ailes de porte.

3. Porte arrière selon la revendication 1, où le mécanisme de rétraction peut faire glisser la vitre dans l'une des ailes de porte.

4. Porte arrière selon n'importe laquelle des revendications précédentes, où le mécanisme de rétraction peut faire pivoter la vitre de 90°.

5. Porte arrière selon n'importe laquelle des revendications précédentes, où le mécanisme de rétraction comprend un disque ou un cylindre ayant une connexion par friction ou une fermeture géométrique avec la vitre.

6. Porte arrière selon n'importe laquelle des revendications précédentes, où le mécanisme de rétraction peut être activé par la poignée (7) associée à la porte arrière.

7. Porte arrière selon n'importe laquelle des revendications précédentes, où la vitre est pivotée au moyen d'un moteur électrique (9).

8. Véhicule à moteur ayant une porte arrière selon n'importe laquelle des revendications 1 à 7.
